**Europäisches Patentamt**

**European Patent Office**

**Office européen des brevets**

(11) Veröffentlichungsnummer: **0 049 306**
**B1**

(12) # EUROPÄISCHE PATENTSCHRIFT

(45) Veröffentlichungstag der Patentschrift:
24.08.88

(51) Int. Cl.⁴: **G 05 B 11/42**, G 05 B 13/02,
G 05 B 5/01

(21) Anmeldenummer: **80106675.4**

(22) Anmeldetag: **30.10.80**

(54) **Regelschaltung.**

(30) Priorität: **07.10.80 CH 7476/80**

(43) Veröffentlichungstag der Anmeldung:
**14.04.82 Patentblatt 82/15**

(45) Bekanntmachung des Hinweises auf die Patenterteilung:
**24.08.88 Patentblatt 88/34**

(84) Benannte Vertragsstaaten:
**BE DE FR IT SE**

(56) Entgegenhaltungen:
EP - A - 0 036 437
DE - A - 2 207 677
DE - A - 2 736 339
US - A - 3 819 999
US - A - 4 096 426
US - A - 4 214 300

W. Oppelt "Kleines Handbuch technischer
Regelvorgänge", 5. Auflage 1972, S. 354-355, Bild 28.19
"Regelungstechnische Praxis und
Prozess-Rechentechnik", Heft 10, Oktober 1973, S.
237-240
H. Pröls "Verbessertes Anfahrverhalten durch
elektronische Regler mit PIDarw-Rückführung";
"Regelungstechnische Praxis" Heft 5, Mai 1977, S.
144-147
A.H. Glattfelder und M. Steiner: "Der Entwurf von
Regelsystemen mit Begrenzungen am Beispiel einer
Chargendistillation"

(73) Patentinhaber: **GEBRÜDER SULZER
AKTIENGESELLSCHAFT, Zürcherstrasse 9,
CH-8401 Winterthur (CH)**

(72) Erfinder: **Herzog, Rudolf, bei der Kirche, CH-9555 Tobel
(CH)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

**Beschreibung**

Die Erfindung betrifft eine Regelschaltung nach dem Oberbegriff des Anspruchs 1.

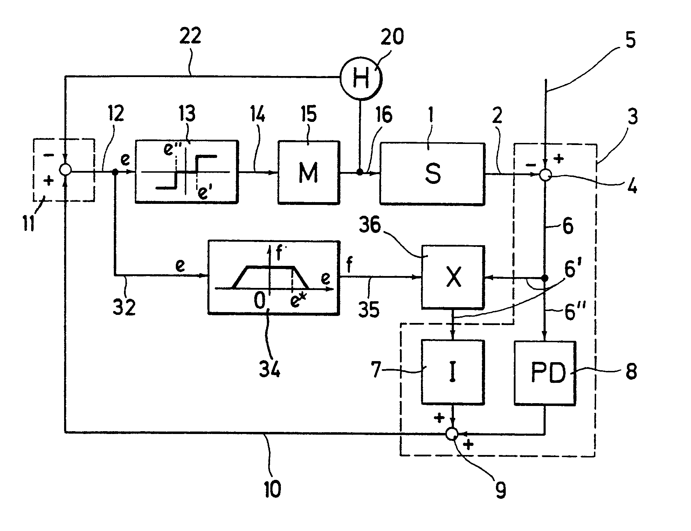

Eine dieser Schaltung ungefähr entsprechende, jedoch nicht identische Schaltung ergibt sich aus der Vereinigung der Fig. 4 und 5 der US-PS 3 819 999. Bei dieser vereinigten Schaltung ist dem Stellmotor ein Verstärker vorgeschaltet, dem das Rückführsignal des Stellmotors und das Ausgangssignal des I-Gliedes aufgeschaltet sind. Dem Vergleichsorgan sind ebenfalls das Ausgangssignal des I-Gliedes und das mit dem Rückführsignal identische Ausgangssignal des Stellmotors aufgeschaltet, aber es fehlt eine Verbindung vom Ausgang des Vergleichsorgans zum Eingang des Stellmotors. Der Ausgang des Vergleichsorgans wirkt über ein Relais auf einen Schalter, der im Eingangspfad des I-Gliedes liegt, um dieses ein- und ausschalten zu können. Das I-Glied wird durch Ausschalten gesperrt, wenn beim Anfahren eines sättigbare Elemente aufweisenden Regelkreises die Sättigung eingetreten ist und solange diese anhält. Durch das Betätigen des Schalters können aber sprunghafte Signaländerungen am Ausgang des I-Gliedes entstehen, die dann in den Regelkreis hineingetragen werden, was zusätzliche Störungen hervorrufen kann. Der Stellmotor muss deshalb leistungsstark ausgebildet sein, wodurch die Regelschaltung verteuert wird, abgesehen davon, dass wegen des Fehlens einer Signalverbindung vom Ausgang des Vergleichsorgans zum Eingang des Stellmotors ein besonderer Verstärker zum Bilden des Stellmotoreingangssignals vorgesehen ist.

Der Erfindung liegt die Aufgabe zugrunde, die Regelschaltung der eingangs genannten Art so zu verbessern, dass unter konstruktiver Vereinfachung der Regelschaltung die durch das Ein- und Ausschalten des I-Gliedes bedingten sprunghaften Störungen eliminiert werden.

Diese Aufgabe wird erfindungsgemäss durch die Merkmale des Kennzeichens des Anspruchs 1 gelöst. Durch den in abschwächendem Sinne auf den Eingang des I-Gliedes wirkenden Funktionsgenerator werden Regelstörungen jeder Art, insbesondere brüsk auftretende, zu Regelschwingungen führende Störungen eliminiert, ohne dass dabei – wie bei der bekannten Schaltung mit Schalter – neue Störungen in den Regelkreis hineingetragen werden. Ausser dieser höheren Regelgüte wird durch die erfindungsgemässe Schaltung erreicht, den konstruktiven Aufwand geringer zu halten, weil ein leistungsschwächerer und daher billigerer Stellmotor verwendet werden kann. Dazu trägt auch bei, dass im Eingang des Stellmotors kein Verstärker vorgesehen werden muss.

Aus Fig. 2 der US-PS 4 096 426 ist eine Regelschaltung mit einem ein I-Glied aufweisenden Regler und einem Stellmotor bekannt, wobei dem I-Glied Abschwächungsmittel vorgeschaltet sind. Der Stellmotor weist jedoch keine limitierte Stellgeschwindigkeit auf, und es fehlt bei ihm eine Rückführung. Dementsprechend fehlt auch ein Vergleichsorgan für ein solches Rückführsignal.

Die Abschwächungsmittel sind zwischen dem Ausgang der Regelstrecke und dem Eingang des I-Gliedes direkt mit diesem verbunden.

Aus «Kleines Handbuch technischer Regelvorgänge», 5. Auflage 1972 von W. Oppelt, Seite 354 bis 355, Bild 28.19 ist eine Regelschaltung mit einem PID-Regler bekannt, der im Vorwärtspfad Einstellmittel aufweist, die eine obere und eine untere Grenze für die Wirkung des Reglers festlegen. Auch in dieser Regelschaltung weist der Stellmotor sowohl keine limitierte Stellgeschwindigkeit als auch keine Rückführung auf. Die Regelschaltung enthält auch keine Abschwächungsmittel, durch die die Wirkung des I-Gliedes in Abhängigkeit von Sättigungen des Stellmotors abgeschwächt würde. Schliesslich fehlt auch eine Verbindung vom Stellmotor zum Eingang des I-Gliedes.

Aus der US-PS 4 214 300 ist ein PID-Regler bekannt, der mit einem Funktionsgeber zum Selbstabgleich des P-, des I- und des D-Gliedes zusammen arbeitet, wobei sowohl dem Eingang des Reglers als auch dem Eingang des Funktionsgebers die Regelabweichung zugeführt wird. Der Funktionsgeber kann auch Multiplikationsorgane enthalten.

Aus dem Artikel von H. Pröls «Verbessertes Anfahrverhalten durch elektronische Regler mit PIDarw-Rückführung» in «Regelungstechnische Praxis und Prozess-Rechentechnik», Heft 10, Oktober 1973, Seite 237 bis 240, aus dem Artikel von A.H. Glattfelder und M. Steiner «Der Entwurf von Regelsystemen mit Begrenzungen am Beispiel einer Chargendestillation» in «Regelungstechnische Praxis», Heft 5, Mai 1977, Seite 144 bis 147 und aus der DE-OS 2 736 339 sind verschiedene Methoden der Begrenzung von I-Gliedern bekannt, die jedoch nicht im Zusammenhang mit einer Regelschaltung der eingangs genannten Art stehen.

Die Erfindung wird nun an einem Ausführungsbeispiel anhand der Zeichnung näher erläutert, die das Schema einer Regelschaltung nach der Erfindung zeigt.

An einer Regelstrecke 1 wird ein Messsignal der interessierenden Regelgrösse über eine Messleitung 2 auf einen Regler 3 geschaltet, der eine Vergleichsstelle 4 enthält, in der durch Subtraktion des Messsignals von einer über eine Signalleitung 5 zugeführten Führungsgrösse die Regelabweichung gebildet wird. Die so gebildete Regelabweichung wird über eine sich in die Äste 6' und 6'' verzweigende Leitung 6 einem I-Glied 7 bzw. einem PD-Glied 8 zugeführt. Die Ausgänge der beiden Glieder 7 und 8 werden in einem Punkt 9 summiert und über eine Leitung 10 einem Vergleichsorgan 11 zugeführt. Dessen Ausgang wirkt über eine Leitung 12 auf einen Dreipunktschalter 13, der über eine Leitung 14 einen Stellmotor 15 mit Stellorgan kontrolliert. Der Motor 15 läuft in Vorwärtsrichtung, wenn das Einschaltsignal e des Schalters 13 die Schwelle e' übersteigt, und in Rückwärtsrichtung, wenn das Einschaltsignal e die Schwelle e'' unterschreitet.

Liegt das Signal e zwischen den Schwellenwerten e' und e'', so ruht der Stellmotor 15. Das mit dem Motor 15 verbundene Stellorgan wirkt, wie durch den Signalpfad 16 dargestellt, auf die Regelstrecke 1 ein. Die Stellung des Stellorgans wird durch einen Hubgeber 20 in ein Rückführsignal umgesetzt, das über eine Leitung 22 zum Vergleichsorgan 11 gelangt.

Erfindungsgemäss wird über eine an die Leitung 12 angeschlossene Zweigleitung 32 das Ausgangssignal e des Vergleichsorgans 11 einem Funktionsgeber 34 zugeführt, dessen Ausgang 35 auf ein Multiplikationsorgan 36 wirkt, das in der Zweigleitung 6' zwischen Vergleichsstelle 4 und dem I-Glied 7 eingefügt ist.

Der Funktionsgeber 34 ist so ausgebildet, dass er – unabhängig vom Vorzeichen des Eingangssignals e – bis zu einer bestimmten Schwelle e* ein konstantes Ausgangssignal f abgibt, das mit weiter wachsendem Eingangssignal linear abnimmt.

Die Einrichtung funktioniert wie folgt: Bei kleinen oder langsamen Störungen steigt der Absolutwert des Ausgangssignals e des Vergleichsorgans 11 nicht erheblich über die im Schalter 13 eingestellten Schwellenwerte e' und e''. Die Schwelle e* im Funktionsgeber 34 wird nicht erreicht und damit bleibt das Ausgangssignal f des Funktionsgebers 34 konstant, im Beispiel gleich «1». Das Multiplikationsorgan 36 lässt somit die Regelabweichung in der Leitung 6 unbeeinflusst auf das I-Glied 7 einwirken. Tritt nun aber eine rasche und erhebliche Störung auf, so folgt der Stellmotor 15 dem über die Leitung 10 gegebenen Stellbefehl nicht mehr genügend rasch, das Ausgangssignal e des Vergleichsorgans 11 steigt über die im Funktionsgeber 34 einprogrammierte Grenze e* an und damit sinkt der Faktor f, so dass das Eingangssignal des I-Gliedes 7 über das Multiplikationsorgan 36 geschwächt wird. Durch diese Schwächung wird verhindert, dass das Ausgangssignal des I-Gliedes unnötig wegläuft und dass bei anschliessendem Vorzeichenwechsel der Regelabweichung eine längere Zeit verstreicht, bis das im I-Glied gespeicherte Signal kompensiert worden ist.

Die Erfindung ist nicht an das Ausführungsbeispiel gebunden; so könnte die Beeinflussung des I-Eingangs auch subtraktiv statt multiplikativ erfolgen und der Stellmotor muss auch nicht durch einen 3-Punktschalter gesteuert werden.

**Patentansprüche**

1. Regelschaltung mit einer Regelstrecke (1), einem Regler (3) mit I-Glied (7) und einem limitierte Stellgeschwindigkeit aufweisenden Stellmotor (15) mit Rückführung (22), durch die der Hub des Stellmotors auf ein zwischen dem Ausgang des Reglers und dem Eingang des Stellmotors in den Regelkreis eingeschaltetes Vergleichsorgan (11) einwirkt, dessen Ausgang ausser auf den Eingang des Stellmotors zusätzlich auf den Eingang des I-Gliedes wirkt, dadurch gekennzeichnet, dass der Ausgang des Vergleichsorgans (11) über einen Funktionsgeber (34) in allmählich abschwächendem Sinne auf den Eingangspfad des I-Gliedes (7) geschaltet ist, indem der Funktionsgeber – unabhängig vom Vorzeichen des vom Vergleichsorgan kommenden Eingangssignals (e) – bis zu einer bestimmten Schwelle (e*) ein konstantes Ausgangssignal (f) und bei weiter wachsendem Eingangssignal (e) ein abnehmendes Ausgangssignal (f) abgibt.

2. Regelschaltung nach Anspruch 1, dadurch gekennzeichnet, dass der Ausgang des Funktionsgebers (34) über ein Multiplikationsorgan (36) in den Eingangspfad des I-Gliedes (7) geschaltet ist.

**Claims**

1. A closed loop circuit arrangement comprising a controlled system (1), a controller (3) having an integrating member (7) and a servo motor (15) which has a limited servo rate and has feed back (22) by which the movement of the servo motor acts on a comparator (11) disposed in the controlled system between the controller output and the servo motor input, the comparator output acting on the input of the integrating member as well as on the servo motor input, characterised in that the comparator output is connected by way of a function transmitter (34) in a gradually attenuating sense to the input path of the integrating member, the function transmitter transmitting – irrespective of the sign of the input signal (e) from the comparator – a constant output signal (f) up to a predetermined threshold (e*) and delivering the decreasing output signal (f) upon a further increase in the input signal (e).

2. A circuit arrangement according to claim 1, characterised in that the output of the function transmitter (34) is connected by way of a multiplication element (36) to the input path of the integrating member (7).

**Revendications**

1. Circuit de régulation comportant un trajet de régulation (1), un régulateur (3) avec un élément d'intégration (7) et un moteur de positionnement (15) présentant une vitesse de positionnement limitée, avec contre-réaction (22), et par lequel la course du moteur de positionnement agit sur un organe de comparaison (11) monté dans le circuit de régulation entre la sortie du régulateur et l'entrée du moteur de positionnement, la sortie de l'organe de comparaison agissant non seulement sur l'entrée du moteur de positionnement mais additionnellement sur l'entrée de l'élément d'intégration, caractérisé en ce que la sortie de l'organe de comparaison (11) est montée par l'intermédiaire d'un générateur de fonctions (34) dans un sens d'affaiblissement progressif sur le trajet d'entrée de l'élément d'intégration du fait que le générateur de fonctions délivre, indépendamment du signe du signal d'entrée (e) venant de l'organe de comparaison et jusqu'à un certain seuil (e*), un signal de sortie constant (f) et lorsque le signal d'entrée (e) croît encore, un signal de sortie décroissant (f).

2. Circuit de régulation selon la revendication 1, caractérisé en ce que la sortie du générateur de fonctions (34) est montée par l'intermédiaire d'un organe de multiplication (36) dans le trajet d'entrée de l'élément d'intégration (7).